# EUROPÄISCHE PATENTSCHRIFT

(11) **EP 3 825 284 B1**
(45) Veröffentlichungstag und Bekanntmachung des Hinweises auf die Patenterteilung: **27.12.2023**
(21) Anmeldenummer: 20209926.3
(22) Anmeldetag: 25.11.2020
(51) Int. Cl.: C02F 1/00, C02F 1/68, B01D 35/04

(54) **FILTER, INSBESONDERE FILTER FÜR TRINKFLASCHEN**
FILTER, IN PARTICULAR FILTER FOR DRINKING BOTTLES
FILTRE, EN PARTICULIER FILTRE POUR GOURDES

(30) Priorität: 25.11.2019 CH 14912019
(43) Veröffentlichungstag der Anmeldung: 26.05.2021
(73) Patentinhaber: FILL ME (Switzerland) AG, 8400 Winterthur (CH)
(72) Erfinder: Batliner, Andreas, 8045 Zürich (CH)
(74) Vertreter: Swisspat Riederer Hasler Patentanwälte AG

(56) Entgegenhaltungen:
- WO-A1-99/29394
- WO-A1-2007/082391
- US-A- 5 417 860

## Beschreibung

### TECHNISCHES GEBIET DER ERFINDUNG

Die Erfindung betrifft einen Filter für Trinkflaschen gemäss Oberbegriff des Anspruchs 1, sowie ein Set mit Trinkflasche und Filter.

### HINTERGRUND DER ERFINDUNG

Heutzutage sind vielseitig verwendbare Getränkebehälter in Gebrauch, welche mit Sieb- oder Rückhalteeinsätzen ausgestattet sind, sodass diese Behälter auch zur Zubereitung von z.B. Tee oder anderen aromatisierten Getränken verwendbar sind. Diese Behälter sind oft aus Kunststoff oder einem Verbund mit hohem Kunststoffanteil gefertigt.

Andererseits werden heutzutage, im Bestreben Plastikabfall und Kontakt von Lebensmitteln mit Plastik zu vermeiden, vermehrt wieder Glasflaschen für Getränke verwendet. Insbesondere besteht der Wunsch gängige verschliessbare Getränkebehälter für Mehrfachgebrauch, welche zu einem Grossteil aus Plastik hergestellt sind, mit Glasflaschen zu ersetzten. Hierfür eignen sich besonders Bügelverschlussflaschen; insbesondere solche, welche sich mit kalten sowie auch heissen Flüssigkeiten wiederholt befüllen lassen und zudem leicht zu reinigen sind. Für die Befüllung mit heissen Flüssigkeiten eignen sich besonders temperaturbeständige und temperaturwechselbeständige Glasflaschen wie zum Beispiel Glasflaschen aus Borosilikatglas. Bügelglasflaschen, welche aufgrund Ihrer besonderen Temperatur- und Temperaturwechselbeständigkeit auch mit heissen Flüssigkeiten befüllt werden können, sind zum Beispiel aus der Offenbarung EP 3 181 470 A2 bekannt.

Nachteilig bei Bügelverschlussflachen kann sein, dass diese mit dem fertigen Getränk befüllt werde. Zum Beispiel wenn ein aromatisiertes Getränk, insbesondere Tee, eingefüllt werden soll, wird dieses normalerweise in einem anderen Gefäss vorbereitet, um danach fertig gefiltert in die Glasflasche eingefüllt zu werden, damit keine störenden Festkörper im Getränk sind. Während bei Plastik- und Plastikverbundbehältern gelegentlich auch Filter bzw. Siebe vorgesehen sein können, weisen Glasflaschen für Gewöhnlich keine Filter-, Sieb- oder Rückhalteeinsätze auf. Glasflaschen können deshalb nicht so versatil eingesetzt werden wie Plastik- und Plastikverbundbehälter.

Einige bestehende Filtersysteme sind im Folgenden erwähnt.

Die Offenlegungsschrift US5417860 zeigt eine Filtervorrichtung zur Verwendung mit Wein- oder anderen Flaschen zum Filtern von Kork oder anderen Sedimenten, während die Flüssigkeit aus der Flasche gegossen wird. Diese Filtervorrichtung ist zylinderartig ausgeführt mit einem oberen gerippten Einsteckbereich mit Ausgiessöffnung zum befestigten Einsetzen der Filtervorrichtung in einen Flaschenhals und einem unteren Filterbereich, welcher die Flüssigkeit beim Ausgiessen filtert und der Ausgiessöffnung des Einsteckbereichs zuleitet. Der Filterbereich weist an seinem unteren Ende ein Entlüftungsloch auf, welches aufgrund seines vorgegebenen Durchmessers eine höchstmögliche Durchflussrate bei gleichmässigem Flüssigkeitsausfluss aus der Flasche und ohne übermässiges Spritzen ermöglicht. Der obere Einsteckbereich weist beabstandet aufeinanderfolgende Rippen auf, welche flexibel genug sind, sich leicht unterschiedlichen Flaschenhalsdurchmessern anzupassen.

Die Offenlegungsschrift WO 99/29394 A1 beschreibt einen tragbaren Wasserfilter für Plastikflaschen. Der Filter ist ausgeführt, um in einen bestimmten Flaschenhals zu passen und diesen abzudichten. Der Filter weist ein Flanschsystem auf, das auf der Lippe des Flaschenhalses aufliegt und dichtet mit dem Hals und dem Flaschenverschluss ab, wenn der Verschluss auf die Flasche geschraubt wird. Die Filterwassereinlässe befinden sich vorzugsweise im unteren Bereich des Filtergehäuses, um das Absaugen der Flüssigkeit vom Boden des Bechers oder Bechers auch bei niedrigem Flüssigkeitsstand zu erleichtern. Zusätzliche Flüssigkeitseinlässe können in den oberen Bereich des Filtergehäuses eingefügt sein, so bemessen und angeordnet, dass die letzte kleine Flüssigkeitsmenge im Flaschenhals abgelassen wird, wenn die Flasche umgedreht wird. Der Aufbau dieses Filters ist relativ komplex. Damit ist die Herstellung relative aufwendig. Zudem scheint es, dass die Abmessungen diese Filters von vornherein auf einen bestimmten Flaschenhals und damit dessen Durchmesser angepasst sein muss, damit das System funktioniert bzw. der Filter gut sitzt.

Die Offenlegungsschrift WO 2007/082391 A1 beschreibt einen Filtereinsatz zum Einsetzen in eine Einsatzöffnung eines Gefäßes wie z.B. einer Tee- oder Kaffeekanne. Der Filtereinsatz weist einen unten geschlossenen zylindrischen Grundkörper mit zumindest zylindermantelseitig ausgebildetem porösem Filterbereich auf. Oberseitig am Grundkörper ist ein im Wesentlichen umlaufender sich nach oben weitender Auflagekörper mit einem sich radial nach aussen weitenden Auflagebereich vorgesehen. Der Auflagebereich dient zum Aufsetzen des Filters auf die Einsatzöffnung eines Gefässes, wie z.B. einer Tee- oder Kaffeekanne, und kann als umlaufender oder teilweise umlaufender Ring ausgebildet sein. Dieser Filtereinsatz kann z.B. aus Metall hergestellt sein, damit ist er im Wesentlichen starr. Damit der Filtereinsatz beim Ausgiessen des Getränks nicht aus dem Gefäss herausfallen kann und zwecks flexibler Anpassung an ein Innenmass der Einsatzöffnung des Gefässes ist der Auflagekörper mit einer elastischen aus einem flexiblen und hitzebeständigen Kunststoff hergestellten Manschette mit wellenförmiger Aussenkontur ummantelt.

### AUFGABE

Es ist eine Aufgabe der vorliegenden Erfindung die Verwendung von Glasflaschen attraktiver zu machen bzw. ihre Verwendbarkeit versatiler zu gestalten. Insbesondere ist es eine Aufgabe, versatil einsetzbare Glasflaschen bereitzustellen, welche sich zum Befüllen mit kalten und heissen Getränken und/oder zum Aromatisieren von kaltem und heissem Wasser eignen. Insgesamt ist es weiter eine Aufgabe Gefässe bereitzustellen, welche sich zum Zubereiten und gegebenenfalls kurzzeitigem Aufbewahren und/oder Transportieren von kalten und heissen Getränken eignen.

Eine weitere Aufgabe der vorliegenden Erfindung ist es einen Filter bereitzustellen, welcher sich insbesondere für Glasflaschen und Glasgefässe eignet. Der Filter soll einfach einsetzbar und herausnehmbar sein. Im Weiteren soll eine Flasche oder Gefäss trotz darin eingesetztem Filter flüssigkeitsdicht verschliessbar sein und/oder, im Wesentlichen ohne dass der Filter verrutscht, transportierbar sein. Im Weiteren soll der Filter einfach und/oder kostengünstig herstellbar sein. Vorzugsweise soll der Filter frei von Kunststoff sein.

### BESCHREIBUNG DER ERFINDUNG

Gelöst wird die oben genannte Aufgabe durch das Bereitstellen eines Filters gemäss Anspruch 1, welcher in eine Glasflasche einsetzbar ist, insbesondere in eine Bügelverschlussglasflasche. Insbesondere offenbart ist ein Filter, welcher geeignet ist zum Einsetzen in eine Flasche, z.B. in eine Trinkflasche, wobei der Filter im Wesentlichen in Form einer Hülse mit einem ersten, offenen Ende und einem zweiten, geschlossenen Ende ausgebildet ist, wobei das erste Ende eine Filteröffnung bildet, das zweite Ende einen Filterschluss bildet und die Erstreckung der Hülse von ihrem ersten Ende zu ihrem zweiten Ende hin im Wesentlichen eine Längsrichtung definiert. Ein erfindungsgemässer Filter zeichnet sich insbesondere dadurch aus, dass die Hülse verjüngt ausgestaltet ist, wobei das erste Ende einen ersten Aussenumfang aufweist und das zweite Ende einen zweiten Aussenumfang, welcher geringer ist als der erste Aussenumfang, und dass der Filter von der Filteröffnung her bzw. von der Filteröffnung ausgehend mindestens einen im Wesentlichen in Längsrichtung ausgerichteten Schlitz aufweist.

Der genannte Filter eignet sich besonders zum herausnehmbaren Einsetzen in eine Trinkflasche. Der Filter wird aufgrund einer Art Federklemmwirkung gegen die Flaschenhalsinnenwand im Flaschenhals fixiert. Einerseits lässt sich der Filter dafür einfach per Hand in den Flaschenhals einschieben und klemmt dort aufgrund seiner Elastizität quer zu seiner Längsrichtung bzw. in radialer Richtung gegen den Flaschenhals. Andererseits lässt sich der Filter mittels Hand bzw. einem Finger einfach wieder herausziehen. Während der Filter in die Flasche eingesetzt ist, kann die Flasche normal verschlossen und transportiert werden. Trotz eingesetztem Filter steht einem dichtenden Verschliessen der Flasche nichts entgegenstehen, da der Filter gegen die Flaschenhalsinnenwand klemmen kann, ohne dabei auf und/oder über die Mündungsöffnung hinaus zu ragen.

Der Filter ist besonders vielseitig. Er kann in Trinkflaschen eingesetzt werden, um im Getränk enthaltene Schwebepartikel beim Ausschenken in der Flasche zurückzuhalten oder um aromatisierte Getränke oder Tees direkt in der Flasche zuzubereiten, indem der mit Teeblätter oder anderem gefüllte Filter in die Flasche eingesetzt und vor dem Ausschenken des Getränks wieder entfernt wird. Zudem kann der Filter beim Reinigen der Flasche als Auffangsieb verwendet werden, indem der Filter umgekehrt, d.h. mit seiner Öffnung voraus, in den Flaschenhals geklemmt wird, um den Flascheninhalt durch das Sieb ausgiessen zu können. Das Filtergut wird dadurch beim Entleeren im Filter aufgefangen.

Eine besonders vorteilhafte Eigenschaft des hier beschriebenen Filters ist seine hohe Toleranz gegenüber herstellungsbedingten Abmessungsabweichungen von Flaschenhälsen, insbesondere gegenüber herstellungsbedingten Abmessungsabweichungen von Flaschenhalsinnendurchmessern. Individuelle Glasflaschen aus einer Fertigungslinie können in der Praxis recht grosse Abmessungsabweichungen aufweisen. Insbesondere der Flaschenhalsinnendurchmesser kann sich von Glasflasche zu Glasflasche aus derselben Fertigungslinie relativ deutlich unterscheiden. Der erfindungsgemässe Filter erweist sich als relative unempfindlich gegenüber herstellungsbedingten Flaschenabmessungsschwankung und ist daher in der Regel für alle Flaschen einer Fertigungslinie verwendbar. Insbesondere kann der erfindungsgemässe Filter durch seine elastische Ausfertigung bzw. seine elastische Zusammendrückbarkeit relativ grosszügige Produktionstoleranz der Flaschenhalsinnendurchmesser ausgleichen bzw. kompensieren. Aufgrund des in Längsrichtung ausgerichteten Schlitzes ist der Filterumfang vorteilhafterweise unter Druck elastisch reduzierbar bzw. verkleinerbar. Insbesondere ist aufgrund des in Längsrichtung ausgerichteten Schlitzes der Filter (insoweit das Material des Filters entsprechend genügend nachgiebig bzw. die Wanddicke des Filters genügend dünn ausgewählt ist) quer zur Längsrichtung elastisch zusammendrückbar, sodass sich die Schlitzflanken des zumindest einen Schlitzes einander nähern, vorzugsweise zumindest soweit bis die Schlitzflanken des zumindest einen Schlitzes aufeinandertreffen oder gar überlappen. Damit lässt sich der Umfang des Filters, d.h. der Aussenumfang wie auch der Innenumfang des Filters, mittels Druck auf die Filteraussenseite im Wesentlichen über den Anteil der Längserstreckung des Filters, in welchem der Schlitz ausgebildet ist, elastisch verkleinern. Damit lässt sich der erfindungsgemässe Filter schnell und einfach in Flaschenöffnungen, deren Öffnungsdurchmesser um ein gewisses Mass geringer ist als jener des Filters, einsetzen und klemmen.

Im Folgenden werden weitere vorteilhafte Ausführungsvarianten angeführt.

Zweckmässigerweise ist die Hülse konisch verjüngt ausgestaltet.

Bevorzugt ist, dass der Filter bzw. die Hülse derart konisch ausgestaltet ist, dass die Hülse gegenüber der Längsrichtung eine Neigung in einem Winkelbereich von 0,5 Grad bis 9 Grad, bevorzugt von 0,5 Grad bis 5 Grad, weiter bevorzugt von 1 Grad bis 4 Grad, weiter bevorzugt von 1 Grad bis 3 Grad, aufweist.

Zweckmässigerweise weitet sich der mindestens eine Schlitz zur Filteröffnung hin, vorzugsweise in dem sich die Flanken des Schlitzes im Wesentlichen V-förmig voneinander spreizen.

Vorteilhafterweise gehen die Flanken des Schlitzes zum offenen Ende hin in den Rand der Filteröffnung über.

Bevorzugterweise sind mindestens zwei Schlitze, vorzugsweise zwei diametral einander gegenüber angeordnete Schlitze, vorgesehen.

Vorteilhaft ist, dass der Abschluss der Filteröffnung keine Hinterschneidung aufweist.

Das Verhältnis von Länge des Filters zu Aussendurchmesser des Filters an seinem weitesten Aussenumfang hat zweckmässigerweise einen Wert von ≥ 2, vorzugsweise ≥ 3, hat.

Der Filter ist insbesondere derart ausgestaltet, dass der Filter aufgrund des mindestens einen Schlitzes quer zur Längsrichtung elastisch kompressibel ist, vorzugsweise derart, dass sich die Filteröffnung unter manuell aufgebrachtem Druck elastisch verengen lässt.

Aufgrund dessen, dass Eigenspannungen im Material des Filters vorhanden sind und mindestens ein Schlitz im Filter angelegt ist, kann die Form der Hülse, obschon vorzugsweise als kreisrundes Konus-Segment ausgelegt, zumindest in einem Abschnitt entlang des Schlitzes von einer kreisrunden Querschnittsfläche abweichen, insbesondere eine abgeflachte Form annehmen. Eigenspannungen können zum Beispiel vorhanden sein, wenn die Filterhülse aus einem zuvor flächigem Materialstück (z.B. Blechstück oder Folienstück) durch Biegen dieses hergestellt wird.

Der Filter ist im Wesentlichen aus einem Metallblech gefertigt, insbesondere z.B. aus Stahlblech oder rostfreiem Stahl, welches eine Dicke im Bereich von 0,05 mm bis 1 mm, vorzugsweise im Bereich von 0,1 mm bis 0,6 mm, hat.

Alternativ ist der Filter im Wesentlichen aus einem Kunststoff hergestellt, wobei die Wandstärke des Filters im Wesentlichen im Bereich von 0,2 mm bis 3 mm liegt, insbesondere z.B. hergestellt aus einer Kunststofffolie einer Dicke im Bereich von 0,2 mm bis 3 mm.

Der Filter weist Löcher auf die, derart gestaltet sind, dass eine Filterfunktion gegeben ist, d.h. z.B. Teeblätter oder Kaffeepulver werden zurückgehalten. Der Filter ist zum Beispiel aus einem zur Filterfunktion geeignet gelochten Metallblech hergestellt.

Vorteilhaft ist, dass die Löcher im Metallblech mindestens um 0,1 cm, bevorzugt mindestens um 0,3 cm, von den Rändern des mindestens einen Schlitzes beabstandet sind.

Vorteilhaft ist, dass die Löcher im Metallblech mindestens um 0,2 cm, bevorzugt mindestens um 0,5 cm, weiter bevorzugt mindestens um 0,8 cm, weiter bevorzugt mindestens um 1,0 cm, vom Rand der Filteröffnung beabstandet sind.

Zweckmässigerweise ist das zweite Ende des Filters derart ausgeformt, dass der Filter auf einer horizontalen Oberfläche abgestellt werden kann. Im weiteren kann das zweite Ende des Filters als Filterboden ausgeführt sein, welcher mit Filterporen versehen ist.

Zweckmässigerweise ist ein Übergang von Schlitz zu Filteröffnung rundlich ausgeführt.

Im Weiteren ist ein Trinkflaschenset offenbart. Das Trinkflaschenset beinhaltet zumindest eine Trinkflasche mit Flaschenhals, welcher in eine Flaschenausgussöffnung mündet, und einen Filter, welcher von der Flaschenausgussöffnung her in den Flaschenhals einsetzbar ist, und zeichnet sich insbesondere dadurch aus, dass der Flaschenhals sich innenseitig, insbesondere vorzugsweise über wenigstens die Hälfte seiner Längserstreckung, von der Flaschenausgussöffnung her konisch verengt. Der Filter ist zweckmässigerweise wie oben beschrieben ausgebildet.

Trinkflaschenset nach einem der vorangehenden Ansprüche, dadurch gekennzeichnet, dass der mindestens eine Schlitz von der Filteröffnung bis mindestens zu einem Filterquerschnitt verläuft, dessen Aussenumfang geringer ist als der Innenumfang der engsten Stelle im Flaschenhals.

Vorteilhaft ist, dass die Länge des mindestens einen Schlitzes mindestens der Länge des Flaschenhalses entspricht oder länger ist, wobei mit der Länge des Flaschenhalses hierbei insbesondere die Tiefe des Flaschenhalses gemeint ist, welche von der Flaschenausgussöffnung 19 bis zur halsinnenseitig engsten Flaschenhalsstelle reicht.

Zweckmässigerweise entspricht die Länge des mindestens einen Schlitzes mindestens der Länge des innenseitig sich konisch verengend ausgestalteten Anteils des Flaschenhalses.

Zweckmässigerweise ist die Länge des mindestens einen Schlitzes mindestens wenigstens 0,5 cm länger, bevorzugt mindestens 1 cm länger, als die Länge des innenseitig konisch verengend ausgestalteten Anteils des Flaschenhalses ausgestaltet.

Zweckmässigerweise ist der Filter im Vergleich zum Flaschenhals gleich oder stärker konisch verjüngt ausgeführt.

Es ist vorteilhaft, dass der Filter in seiner Längserstreckung zumindest 1,5 mal so lange ist wie der Flaschenhals. Besonders bevorzugt ist der Filter in seiner Längserstreckung zwischen 1,5 bis 4 mal so lange wie der Flaschenhals, weiter bevorzugt zwischen 1,5 bis 3 mal so lange wie der Flaschenhals, weiter bevorzugt zwischen 1,5 bis 2,5 mal so lange wie der Flaschenhals.

Zweckmässigerweise ist der grösste Aussendurchmesser des Filters in nicht komprimiertem Zustand des Filters grösser als der engste Innendurchmesser im Flaschenhals, damit der Filter beim Einführen in den Flaschenhals gegen die sich konisch verengende Innenwand klemmt. Der grösste Aussendurchmesser des Filters ist beim sich insgesamt verjüngenden Filter insbesondere der Aussendurchmesser des Filters an der Filteröffnung. Damit kann auch gesagt werden, dass der Aussendurchmesser des Filters an der Filteröffnung in nicht komprimiertem Zustand des Filters grösser ist als der engste Innendurchmesser im Flaschenhals.

Ein Übergang von Schlitz zu Filteröffnung kann rundlich ausgeführt sein.

Die Trinkflasche kann einen Verschluss, z.B. einen Bügelverschluss oder einen Drehverschluss, aufweisen.

Genannte optionale Merkmale können in beliebiger Kombination verwirklicht werden, soweit sie sich nicht gegenseitig ausschliessen. Insbesondere dort wo bevorzugte Bereiche angegeben sind, ergeben sich weitere bevorzugte Bereiche aus Kombinationen der in den Bereichen genannten Minima und Maxima.

Weitere Vorteile, Merkmale und bevorzugte Ausführungen der Erfindung ergeben sich aus der nachfolgend detaillierten Beschreibung der Erfindung unter Bezugnahme auf Figuren.

### KURZBESCHREIBUNG DER FIGUREN

Es zeigen in nicht massstabsgetreuer, schematischer Darstellung:
- Figur 1:: eine Seitenansicht eines Filters;
- Figur 2:: eine Seitenansicht eines Filters, welche gegenüber der Ansicht in Fig. 1 um 90 Grad um die Längsachse des Filters gedreht ist;
- Figur 3:: eine Seitenansicht eines Trinkflaschensets;
- Figur4:: eine Seitenansicht eines Trinkflaschensets, welche gegenüber der Ansicht in Fig. 1 um 90 Grad gedreht ist;
- Figur 5:: eine Seitenansicht eines Trinkflaschensets, wie in Fig. 4 gezeigt, jedoch mit Hilfslinien zur Hervorhebung von Schrägen von Wänden im Flaschenhals und am Filter.

Nachfolgend wird die Erfindung unter Bezugnahme auf die Figuren näher beschrieben. Genannte bevorzugte Merkmale können in beliebiger Kombination verwirklicht werden, insoweit sie sich nicht gegenseitig ausschliessen.

Im Folgenden stehen gleiche Bezugsziffern für gleiche oder funktionsgleiche Elemente in unterschiedlichen Figuren. Ein oder mehrere zusätzliche Apostrophe können gegebenenfalls zur Unterscheidung mehrerer gleichartiger bzw. funktionsgleicher Elemente dienen.

### DETAILIERTE BESCHREIBUNG DER FIGUREN

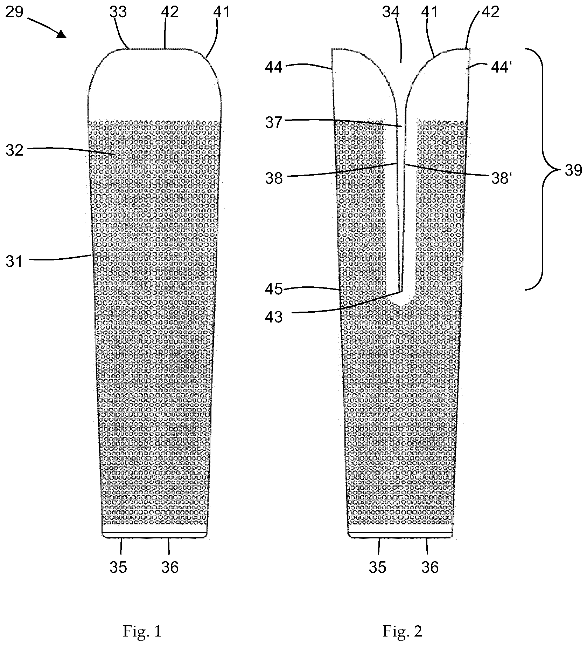

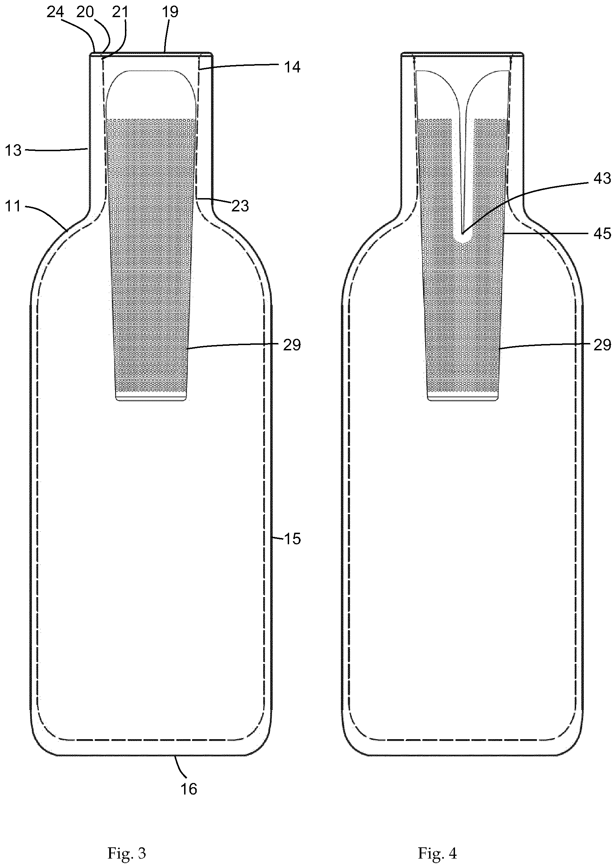

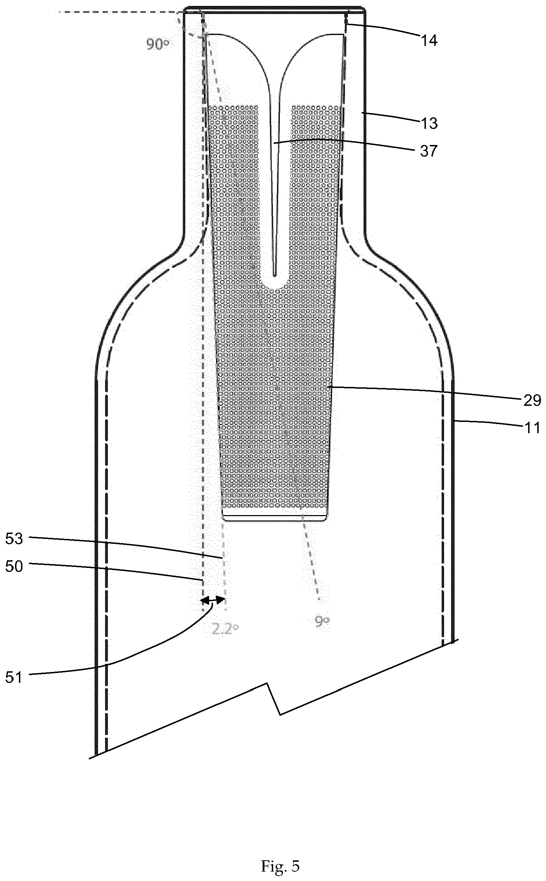

In Fig. 1 und Fig. 2 ist eine erfindungsgemässe Ausführung eines Filters 29 in zwei gegeneinander um 90 Grad gedrehten Ansichten dargestellt. In ähnlicher Weise in zwei gegeneinander um 90 Grad gedrehten Ansichten ist in Fig. 3 und Fig. 4 in einem Anwendungsbeispiel der Filter 29 eingesetzt in eine Flasche 11 dargestellt. In Fig. 5 sind anhand einer Detailansicht beispielhafte gegenseitige Winkelabmessungen von Flaschenhals und Filter verdeutlicht.

Der in den Figuren dargestellte Filter 29 weist im Wesentlichen eine verjüngte, hülsenartige Form auf, indem der Filter 29 im Wesentlichen aufgebaut ist aus einem hülsenartigen Mantel 31, im Weiteren auch als Hülse oder Filterwand bezeichnet, welcher an einem ersten bzw. oberen Ende 33 eine Filteröffnung 34 bildet und an einem zweiten bzw. unteren Ende 35 geschlossen bzw. mit einem Abschlussteil 36 abgeschlossen ist und welcher vom ersten bzw. oberen Ende 33 zum zweiten bzw. unteren Ende 35 verjüngt ausgebildet ist. Die insgesamt einseitig geschlossene hülsenartige Form des Filters 29 dient dem Zweck, den Filter 29 in eine Flasche 11, insbesondere deren Flaschenhals 13 einzusetzen, und zwar so, dass der Filter 29 zweckmässigerweise im Flaschenhals 13, d.h. insbesondere an der Flaschenhalsinnenseite 14, festsitzt, insbesondere indem das obere Ende 33 des Filters 29 gegen die Flaschenhalsinnenseite 14 klemmt, während das untere Ende 35 bis in den Flaschenbauch 15 ragt.

Mantel bzw. Hülse 31 und Abschlussteil 36 können zweckmässigerweise aus einem Metallblech, d.h. zweckmässigerweise zum Beispiel aus einem mit durchgehenden Löchern 32 versetzten Blech, wie in den Figuren gezeigt, gefertigt sein. Anstatt eines Metallblechs kann alternativ gegebenenfalls eine Folie aus Kunststoff verwendet werden. Die Fertigung aus einem Kunststoffmaterial könnte alternativ auch durch Spritzguss oder einen anderen Kunststofffertigungsprozess erfolgen. Hülse 31 und optional auch das Filterabschlussteil 36 weisen damit eine Vielzahl an Durchgängen bzw. Poren oder Löcher 32 auf, welche Filterwirkung haben, insoweit Filtergut und Abmessungen der Durchgänge bzw. Poren oder Löcher 32 entsprechend aufeinander abgestimmt sind. Abhängig von der gewünschten Filterwirkung können die Durchgänge 32 grösser oder kleiner ausgeführt sein. Die Durchbrüche 32 des Filters können beispielsweise einen Durchmesser im Bereich von 0,1 mm bis 3 mm aufweisen, um zum Beispiel als Teefilter zu dienen.

Die Hülse 31 hat - in Anpassung an einen Flaschenhals - im Wesentlichen einen runden Querschnitt oder lässt sich beim Einbringen in den Flaschenhals zumindest in eine dem Flaschenhals angepasst runde Form drücken.

Die Hülse 31 ist zweckmässigerweise zum Filterabschluss 36 hin verjüngt bzw. verengt, insbesondere konisch verjüngt bzw. verengt ausgeführt, d.h. vorzugsweise ist die Hülse kegelstumpfartig bzw. konisch ausgebildet. Bei sich verjüngter, insbesondere konisch verjüngter Hülse 31, verkleinert sich der Querschnittsdurchmesser der Hülse 31 über die Längserstreckung der Hülse 31, d.h. mit fortschreitender Hülsenverengung bzw. Hülsentiefe. Anders ausgerückt ist eine verjüngte, insbesondere konisch verjüngte Hülse 31 derart ausgestaltet, dass ihr erstes Ende 33 einen ersten Aussenumfang aufweist und ihr zweites Ende 35 einen zweiten Aussenumfang, welcher geringer ist als der erste Aussenumfang.

Die insgesamt verjüngte oder insbesondere konisch verjüngte Form des Filters 29 verbessert zum einen die Einführbarkeit des Filters 29 in einen Flaschenhals 13, indem der untere geschlossene Teil des Filters 29 (d.h. sein zweites Ende 35) einen kleineren maximalen Aussendurchmesser aufweist als der Innendurchmesser des Flaschenhalses 13 an seiner engsten Stelle, während der obere offene Teil des Filters 29 (d.h. sein erstes Ende 33) einen grösseren maximalen Aussendurchmesser aufweist als der Innendurchmesser des Flaschenhalses 13 an seiner engsten Stelle. Zum anderen sitzt der Filter 29 aufgrund seiner verjüngten Form besonders gut in einem Flaschenhals 13 und zwar ohne in den Flaschenbauch 15 der aufrechtstehenden Flasche 11 zu fallen.

Die Hülse 31 weist von der Filteröffnung 34 her bzw. von der Filteröffnung 34 ausgehend einen oder mehrere (bevorzugt wie in den Figuren gezeigt z.B. zwei) im Wesentlichen in Längsrichtung 50 der Hülse 31 ausgerichtete Schlitze 37 auf, welche sich von der Filteröffnung 34 je ungefähr bis zu einem gewissen Punkt der Längserstreckung des Filters 29 erstrecken. Im in den Figuren gezeigten Beispiel erstrecken sich die Schlitze 37 insbesondere ungefähr bis zur Hälfte der Längserstreckung des Filters 29 bzw. über die halbe Filterlängserstreckung. Ein Schlitz 37 ist eine längliche Aussparung bzw. Nut in der Hülse 31, welche an der Filteröffnung 34 ihren Anfang nimmt und sich in Längsrichtung 50 der Hülse bzw. Filterwand 31 erstreckt. Die Schlitze 37 weiten sich zweckmässigerweise zur Filteröffnung 34 hin. Im in den Figuren gezeigten Beispiel sind zwei Schlitze 37 gezeigt. Alternativ sind Ausführungen mit lediglich einem Schlitz 37 oder mehr als zwei Schlitze in der Hülse 31 möglich. Es kann also ein Schlitz 37 vorliegen oder es können mehrere Schlitze, zum Beispiel vorzugsweise zwei Schlitze 37, vorliegen.

Das Material des Filters 29 ist so gewählt, dass dieser im Abschnitt 39 der eingeschlitzten Filterlängserstreckung quer zur Längserstreckung der Hülse elastisch zusammengedrückt werden kann, zumindest soweit die Schlitzöffnung bzw. Schlitzöffnungen 37 dies erlauben. Aufgrund eines oder mehrerer Schlitze 37 ist insbesondere der Filterumfang im eingeschlitzten Abschnitt 39 (d.h. in Querschnittsebenen) entlang des bzw. der Schlitze 37 elastisch komprimierbar, indem bei radialem Druck von aussen auf die Hülse bzw. den Mantel 31 sich der bzw. die Schlitze 37 verengen (d.h. die beiden Längskanten eines Schlitzes sich einander nähern) und damit sich der Filterumfang verkleinert. Es besteht somit eine Federwirkung in Querschnittsebenen des Filters, zumindest in Querschnittsebenen in jenem Abschnitt 39 des Filters 29, welcher den oder die Schlitze 37 aufweist.

Ein Schlitz 37 entspricht insbesondere einer sich in Längsrichtung der Hülse 31 verlaufenden Materialaussparung. Die Materialaussparung wird definiert durch zwei Flanken 38 und 38', welche von einem Ursprung im Längsverlauf der Hülse 31, d.h. dem Schlitzgrund 43, ausgehend sich zum ersten Ende 33 der Hülse 31 hin erstrecken. Die Flanken 38, 38' verlaufen zweckmässigerweise zur Filteröffnung 34 hin im Wesentlichen voneinander abspreizend, insbesondere vorzugsweise im Wesentlichen vom Schlitzgrund 43 aus V-förmig (monoton) voneinander abspreizend (insbesondere in einem spitzen Winkel voneinander abspreizend), um dann - z.B. in einer Rundung 41 - vom Schlitz 37 zur Filteröffnung 34 hin in den Rand 42 der Filteröffnung überzugehen. Bei einem Schlitz 37 ergibt sich ein Filterlappen oder bei zwei oder mehr Schlitzen 37 ergeben sich zwei bzw. mehr Filterlappen 44, 44', welche materialabhängig in einem gewissen Masse (bzw. insoweit die Materialeigenschaften des Filtermaterial und die Aussparung der Schlitze es zulassen) beweglich, insbesondere gegeneinander kompressibel beweglich, sind. Aufgrund der vom Schlitzgrund 43 bis nahe der Filteröffnung 34 verlaufenden V-förmigen Schlitzform lassen sich die Filterlappen 44, 44' unter radial von aussen einwirkendem Druck zusammendrücken bis sich jeweils die beiden Flanken 38, 38' eines Schlitzes 37 gegenseitig berühren. Beim Zusammendrücken verringert sich der Umfang des Filters. Es kann gesagt werden, dass der Filterabschnitt 39 entlang des Schlitzes 37 umso kompressibler ist, desto weiter die Schlitzaussparung (bzw. desto grösser der Winkel zwischen den Schlitzflanken) im nicht komprimierten bzw. ursprünglichen Zustand ist. Ob diese Kompressibilität jedoch elastisch ist, hängt von den Materialeigenschaften des Filters 29 ab.

Im Prinzip können die Schlitzflanken alternativ parallel zueinander ausgerichtet sein. Wenn die Schlitze dabei gleichzeitig jedoch relativ schmal ausgelegt sein sollen (um möglichst keine Festkörper durchzulassen), kann eine Vielzahl von Schlitzen (z.B. bevorzugt drei oder mehr Schlitze oder weiter bevorzugt vier oder mehr Schlitze) nötig sein, um eine genügende Kompressibilität des geschlitzten Filterabschnitts sicherzustellen.

Die vorzugsweise zwei Schlitze 37 sind bevorzugt diametral voneinander beabstandet. Ähnlich wie bei der Anordnung mit zwei Schlitzen ist auch bei mehr als zwei Schlitzen eine gleichmässig über den Umfang des Mantels bzw. der Hülse 31 verteilte Anordnung von Schlitzen möglich.

Zweckmässigerweise besteht der Filter 29 im Wesentlichen aus einem biegbaren, vorzugsweise elastisch biegbaren Material, insbesondere aus einem Material, welches erlaubt, dass sich die Filteröffnung 34 und insgesamt der Hülsenabschnitt 39 entlang des bzw. der Schlitze 37 unter manuell aufgebrachtem Druck elastisch verengen lässt.

Es kann sein, dass aufgrund einer Kombination des mindestens einen Schlitzes 37 und von Eigenspannungen im Material des Filters die Hülse 31, obschon vorzugsweise als kreisrundes Konus-Segment ausgelegt, zumindest im Hülsenabschnitt 39 entlang des Schlitzes 37, d.h. im geschlitzten Hülsenabschnitt 39, von einer kreisrunden Querschnittsfläche abweichen kann, insbesondere eine abgeflachte, ovalartige Form annimmt. Dies stört jedoch nicht, sondern gibt unter Umständen zusätzliche Klemmwirkung.

Der Filter 29 ist bevorzugt aus Metall, besonders bevorzugt aus Stahl, insbesondere rostfreiem Stahl, gefertigt, kann aber auch aus Kunststoff gefertigt sein. Dabei werden insbesondere Metallbleche einer Dicke im Bereich von 0,1 mm bis 0,6 mm bevorzugt. Derartige Metallbleche sind zwecks Filterfunktion gelocht. Damit der Filter 29 genügend Stabilität aufweist können die Löcher im Metallblech um mindestens 0,1 cm, bevorzugt mind. 0,3 cm, weiter bevorzugt mindestens 0,5 cm, von den Rändern des mindestens einen Schlitzes 37 beabstandet sein. Zudem können die Löcher im Metallblech um mindestens 0,2 cm, bevorzugt mindestens 0,5 cm, weiter bevorzugt mindestens 0,8 cm, weiter bevorzugt mindestens 1,0 cm, vom obersten Rand 42 der Filteröffnung 34 beabstandet sein, um genügend stabil für die händische Manipulation beim Einsetzen und Herausnehmen des Filters 29 ausgebildet zu sein.

In Fig. 3 und Fig. 4 ist eine Flasche dargestellt, in welche der oben aufgezeigte Filter gesteckt ist. Die Flasche 11 weist einen Flaschenbauch 15 mit einer Flaschenöffnung 19 auf, wobei ein Flaschenhals 13 vom Flaschenbauch 15 entspringt und zur Flaschenöffnung 19 führt. Der Flaschenhals 13 mit der Flaschenöffnung 19 ist normalerweise flaschenoberseitig angeordnet, während flaschenunterseitig ein Flaschenboden 16 ausgeformt ist, mittels welchem die Flasche 11 sicher abgestellt werden kann. Der Flaschenhals 13 und die Flaschenöffnung 19 dienen als Ausguss. Die Flaschenöffnung 19 ist vorzugsweise mittels Deckel verschließbar. Eine derartige Flasche 11 kann zum Beispiel mit einem Bügelverschluss (nicht gezeigt) ausgerüstet sein. Alternativ ist auch ein Drehdeckelverschluss (nicht gezeigt) denkbar. Um auch für heisse Getränke nutzbar zu sein, ist die Flasche 11 zum Beispiel aus Borosilikatglas gefertigt.

In Fig. 3 und Fig. 4 ist der oben beschriebene Filter 29 von der Flaschenöffnung 19 her in den Flaschenhals 13 eingesteckt bzw. eingesetzt dargestellt. Aufgrund der sich nach unten verjüngenden Ausführungsform des Filters 29 kann dessen unteres Ende 35 in und durch den Flaschenhals 13 gesteckt werden, wobei dessen oberes Ende 33 sich gegen die Innenwand 14 des Flaschenhalses 13 verklemmt bzw. drückt, sodass z.B. Reibschluss entsteht.

Die in Fig. 3 und Fig. 4 gezeigt Flasche 11 besitzt eine von der Flaschenöffnung 19 her sich innenseitig konisch verengenden Flaschenhals 13. Diese konische Verengung im Flaschenhals zum Flaschenbauch hin kann umgekehrt als konische Aufweitung zur Flaschenöffnung 19 hin betrachtet werden. Diese wird auch Entformungsschräge genannt. Dass sich der Flaschenhals 13 innenseitig konisch verengt, bevor er in den Flaschenbauch 15 übergeht, ist insbesondere in Fig. 5 zu erkennen. Hier ist die Wandschräge der Innenwand 14 des Flaschenhalses 13 gegenüber der gestrichelt angezeigten Längsrichtung 50, welche gleichzeitig die Vertikale anzeigt, ersichtlich. Die Entformungsschräge in der Flaschenmündung hat in der Praxis einen Winkel von ca. 2 Grad.

Weiter ist in Fig. 5 eine konische Ausführung des Filters 29 mittels gestrichelter Verlängerung 53 der Mantelseite des Filters 29 dadurch angezeigt, dass sich aus dem Vergleich der Vertikalen 50 und der Verlängerung 53 der Verjüngungswinkel 51 des Filters 29 (auch Öffnungswinkel genannt) ergibt. Wird der Filter 29 weiter in den sich verengenden Flaschenhals 13 gestossen, so wird sich der Filter 29 entsprechend seiner dabei erfahrenen elastischen radialen Kompression im Flaschenhals festklemmen. Der oder die Schlitze 37 werden mit zunehmendem Kompressionsdruck enger.

Da der Filter 29 mit mindestens einem Schlitz ausgestattet ist, kann dieser aufgrund einer Federwirkung in Filterquerrichtung im Filterabschnitt 39 entlang des Schlitzes 37 in den Flaschenhals 13 geklemmt werden bzw. kann aufgrund einer daraus resultierenden Klemmwirkung im Flaschenhals 13 (in einem gewissen Mass rutschfrei) eingesetzt sein. Aus der elastischen Klemmwirkung ergibt sich zudem der Vorteil, dass der Filter wiederherausnehmbar ist.

Der Filter 29 ist vorzugsweise derart konisch verjüngt ausgebildet, dass der Hülsen- bzw. der Mantel 31 gegenüber der Längserstreckungsrichtung des Filters (in der Figur gegenüber der Vertikalen 50) eine Wandschräge in einem Winkelbereich von 0,5 Grad bis 9 Grad, bevorzugt von 0,5 Grad bis 5 Grad, weiter bevorzugt von 1 Grad bis 4 Grad, weiter bevorzugt von 1 Grad bis 3 Grad, aufweist. Die Wandschräge kann auch als Öffnungswinkel des als Konus-Segment bzw. Kegelstumpfsegment geformten Filters bezeichnet werden.

Zweckmässig ist, dass der Filter 29 in seinem nicht-komprimierten Zustand im Vergleich zum Flaschenhals 13 gleich oder stärker konisch verengend ausgeführt ist. Die Hülse 31 besitzt damit eine Wandschräge (z.B. 2,2 Grad bzw. Winkelgrad), welche im Wesentlichen jener der Wandschräge der Flaschenhalsinnenseite 14 entspricht oder vorzugsweise grösser ist als jene der Flaschenhalsinnenseite 14. Im Beispiel gemäss Fig. 5 ist die Wandschräge des Mantels 31 ca. 2,2 Grad (z.B. 2 Grad) gegenüber der Vertikalen geneigt, während die Wandschräge der relevanten Flaschenhalsinnenseite 14 mit ca. 2 Grad gegenüber der Vertikalen weniger stark geneigt ist.

Bei aufeinander abgestimmten Abmessungen von verjüngtem Flaschenhals 13 und Filter 29 kann verhindert werden, dass der Filter 29 in den Flaschenbauch 15 durchrutscht. Ein Durchrutschen kann insbesondere dadurch verhindert werden, dass der grösste Aussendurchmesser des maximal komprimierten Filters 29 grösser ist als der Innendurchmesser des Flaschenhalses 13 an seiner engsten Stelle 23.

Um in den Hals einer Trinkflasche einsetzbar bzw. einführbar zu sein, ist zweckmässigerweise der Aussendurchmesser des Abschlusses oder Bodens 36 des Filters 29 kleiner als der Flaschenhalsinnendurchmesser an seiner engsten Stelle 23.

Um eine elastische Klemmwirkung des Filters 29 im Flaschenhals zu erzielen, ist vorteilhaft, dass der mindestens eine Schlitz 37 von der Filteröffnung 34 her bzw. ausgehend mindestens bis zu einem Filterquerschnitt 45 verläuft, dessen Aussenumfang geringer ist als der Innenumfang der engsten Stelle 23 im Flaschenhals 13. Dadurch kann der Filter 29 soweit in den Flaschenhals 13 eingeführt werden, dass der Schlitz 37 des Filters bis über die engsten Stelle 23 des Flaschenhalses hinaus zum Flaschenbauch 15 hin (bzw. in das Volumen des Flaschenbauchs 15) ragt. Insoweit gleichzeitig der grösste Aussendurchmesser am Filter 29 (im nicht-komprimierten Zustand) grösser ist als die engste Stelle 23 innenseitig im Flaschenhals 13 (weiter bevorzugst auch grösser als der Mündungsdurchmesser an der Flaschenöffnung 19), kann der Filter 29 aufgrund seiner Kompressibilität im Filterabschnitt 39 entlang des Schlitzes 37 weiter in den Flaschenhals 13 hineingestossen werden, sodass der Filter 29 aufgrund seiner Federkraft innenseitig im Flaschenhals 14 klemmt.

Als praktische Vorgabe kann weiter bestimmt sein, dass die Länge des mindestens einen Schlitzes 37 mindestens der Länge des Flaschenhalses 13 entspricht oder länger ist. Mit der Länge des Flaschenhalses 13 ist hierbei insbesondere die Tiefe des Flaschenhalses gemeint, welche von der Flaschenausgussöffnung 19 bis zur halsinnenseitig engsten Flaschenhalsstelle 23 reicht. Weitergehend kann bestimmt sein, dass die Länge des mindestens einen Schlitzes 37 mindestens der Länge des innenseitig sich konisch verengend ausgestalteten Anteils des Flaschenhalses 13 entspricht oder übertrifft, oder weiter bevorzugt es kann bestimmt sein, dass die Länge des mindestens einen Schlitzes 37 die Länge des mindestens einen Schlitzes 37 um mindestens 0,5 cm länger, bevorzugt mindestens 1 cm länger, als die Länge des innenseitig sich konisch verengend ausgestalteten Anteils des Flaschenhalses 13 ausgestaltet ist.

Als praktische Vorgabe kann weiter bestimmt sein, dass der grösste Durchmesser der Filteröffnung 34 in nicht-komprimiertem Zustand grösser ist als der Mündungsdurchmesser der Flaschenmündung bzw. Flaschenöffnung 19, insbesondere zumindest grösser als die Flaschenausgussöffnung am Mündungsdurchmesser unterhalb eines optional vorhandenen Kantenbruchs 20, damit der Filter 29 beim Einführen in den Flaschenhals 13 gegen die sich konisch verengende Innenwand 14 klemmt.

Vorteilhafter Weise ist der Filter 29 in seiner Längserstreckung zumindest 1,5 mal so lang wie der Flaschenhals 13. Weiter bevorzugt ist der Filter 29 in seiner Längserstreckung zwischen 1,5 bis 4 mal so lang wie der Flaschenhals 13, weiter bevorzugt zwischen 1,5 bis 3 mal so lang wie der Flaschenhals 13, weiter bevorzugt zwischen 1,5 bis 2,5 mal so lang wie der Flaschenhals 13. Alternativ, insbesondere bei den in den Fig. 3 und Fig. 4 dargestellten Flaschentypen wird bevorzugt, dass das Verhältnis von Länge des Filters zu Aussendurchmesser des Filters an seinem weitesten Aussenumfang einen Wert von grössergleich 2, vorzugsweise grössergleich 3, hat. Dadurch wird sichergestellt, dass der Filter in seiner Längserstreckung genügend tief in den Flaschenbauch 15 ragt, um einen genügenden Austausch der Flüssigkeit mit dem Filtergut, wie zum Beispiel Tee, über die Mantelseite 31 des Filters 29 zu erlauben. Alternativ kann gesagt werden, dass bevorzugt ist, dass das Verhältnis von Länge des Filters zu Aussenumfang des Filters an seinem weitesten Aussenumfang einen Wert von grössergleich 0,63, vorzugsweise grössergleich 0,95, hat.

Der Rand 42 der Filteröffnung 34 weist filteraussenseitig keine Hinterschneidungen auf. Dadurch kann der Filter 29 genügend tief in den Flaschenhals 13 eingeschoben werden, sodass beim Verschliessen der Flaschenöffnung 19 der Filter 29 nicht stört bzw. nicht zwischen Deckelabdichtung und Flaschenmündungsrand 24 gerät. Gleichzeitig wird dabei der Flaschenhalsdurchmesser optimal genutzt, um einen Filter mit maximalgrossem Öffnungsdurchmesser einzusetzen.

Der Übergang 41 von Schlitz 37 zu Filteröffnung 34 ist vorzugsweise rundlich ausgeführt. Dies hat den Vorteil, dass der Filter kopfüber, d.h. mit der Filteröffnung 34 bzw. dem ersten Ende 33 der Filterhülse voraus, in den Flaschenhals 13 gesteckt werden kann. Ein Filter kann dadurch in eine im Verhältnis zum grössten Öffnungsdurchmessers des Filters 29 etwas kleinere Flaschenausgussöffnung 19 gesteckt werden. Die Rundung des Übergangs 41 von Schlitz 37 zu Filteröffnung 34 rutscht bei Einstossen des Filters 29 in den Flaschenhals 13 über die Mündungskante 21 der Flaschenausgussöffnung 19. Dieses überkopf einstecken des Filters 29 in einen Flaschenhals kann zum Beispiel beim Ausspülen von in einer Flasche enthaltenen Festkörpern sinnvollsein, um diese per Filter aufzufangen und aus dem Filter in einen Abfalleimer zu entleeren.

Der Filter- oder Hülsenabschluss bzw. das zweite Ende des Filters 35 ist vorzugsweise derart ausgeführt, dass der Filter 29 auf einer flachen und im Wesentlichen horizontalen Ablagefläche - insb. ohne umzufallen - abgestellt werden kann. Hierfür ist ein Hülsenabschlussteil 36 zum Beispiel als flache Platte ausgeführt, welche die Hülse 31 unten bzw. an deren zweiten Ende 35 schliesst. Die einseitig geschlossene Hülse 31 bildet einen Filter 29 mit einem am geschlossenen Ende 35 der Hülse ausgebildeten Filterboden 36. Der Filterboden 36 kann mit Filterporen 32 versehen sein. Der Filterboden 36 entspricht vorzugsweise einer Abschlussplatte mit Filterporen 32.

Aufgrund der oben beschriebenen konischen Form kann der Filter 29 besonders einfach in einen Flaschenhals 13 eingeführt werden. Aufgrund der oben beschriebenen elastischen Komprimierbarkeit des Filters 29 kann der Filter im Wesentlichen passgenau im Flaschenhals 13 geklemmt werden.

Während vorstehend spezifische Ausführungsformen beschrieben wurden, ist es offensichtlich, dass unterschiedliche Kombinationen der aufgezeigten Ausführungsmöglichkeiten angewendet werden können, insoweit sich die Ausführungsmöglichkeiten nicht gegenseitig ausschliessen.

Während die Erfindung vorstehend unter Bezugnahme auf spezifische Ausführungsformen beschrieben wurde, ist es offensichtlich, dass Änderungen, Modifikationen, Variationen und Kombinationen ohne vom Erfindungsgedanken abzuweichen gemacht werden können.

### BEZUGSZEICHENLISTE:

- 11: Flasche, insb. Trinkflasche
- 13: Flaschenhals
- 14: Flaschenhalsinnenseite
- 15: Flaschenkörper bzw. Flaschenbauch
- 16: Flaschenboden
- 19: Flaschenöffnung bzw. Flaschenausgussöffnung (Ausguss) oder Mündung
- 20: Kantenbruch an der Flaschenöffnung
- 21: Mündungskante unterhalb des Kantenbruchs,
- 23: Flaschenhalsenge (engste Stelle des Flaschenhalses)
- 24: Mündungsrand
- 29: Filter bzw. Sieb
- 31: Hülse bzw. Filtermantel bzw. Filterwand
- 32: Durchgänge
- 33: erstes Ende der Hülse
- 34: Filteröffnung
- 35: zweites Ende der Hülse bzw. Filterschluss
- 36: Filterschlussteil, z.B. als Filterboden ausgestaltet
- 37: Schlitz
- 38,: erste Schlitzflank
- 38': zweite Schlitzflanke
- 39: geschlitzter Filterabschnitt (Bereich mit (gegenüber ungeschlitztem Filterabschnitt) erhöhter elastischer Komprimierbarkeit in Filterquerschnittsebene)
- 41: Übergang von Schlitz zu Filteröffnung, auch Schlitzabschluss genannt
- 42: Rand der Filteröffnung
- 43: Schlitzgrund
- 44: erster Filterlappen
- 44': zweiter Filterlappen
- 45: Filterquerschnitt bei Schlitzgrund
- 50: Anzeige einer vertikalen Richtung oder Längsrichtung des Filters
- 51: Anzeige des Verjüngungswinkels (auch Öffnungswinkel genannt)
- 53: Anzeige der schrägen bzw. geneigten Filtermantels

## Patentansprüche

1. Filter (29) geeignet zum Einsetzen in eine Flasche (11), insbesondere in eine Trinkflasche, der Filter im Wesentlichen ausgebildet in Form einer Hülse (31) mit einem ersten, offenen Ende (33) und einem zweiten, geschlossenen Ende (35), wobei das erste Ende (33) eine Filteröffnung (34) bildet, das zweite Ende (35) einen Filterschluss (36) bildet und die Erstreckung der Hülse (31) von ihrem ersten Ende (33) zu ihrem zweiten Ende (35) hin im Wesentlichen eine Längsrichtung definiert,
**dadurch gekennzeichnet,**
- **dass** die Hülse (31) verjüngt ausgestaltet ist, wobei das erste Ende (33) einen ersten Aussenumfang aufweist und das zweite Ende (35) einen zweiten Aussenumfang, welcher geringer ist als der erste Aussenumfang,
- **dass** der Filter mindestens einen von der Filteröffnung (34) her im Wesentlichen in Längsrichtung ausgerichteten Schlitz (37) aufweist,
- **dass** der Filter aus einem Metallblech gefertigt ist, welches eine Dicke im Bereich von 0,05 mm bis 1 mm hat, oder dass der Filter im Wesentlichen aus Kunststoff hergestellt ist, wobei die Wandstärke des Filters im Wesentlichen im Bereich von 0,2 mm bis 3 mm liegt, und
- **dass** der Filter Löcher aufweist welche eine Filterwirkung haben.

2. Filter nach Anspruch 1
**dadurch gekennzeichnet, dass** die Flanken (38, 38') des Schlitzes (37) zum offenen Ende (33) hin in den Rand (42) der Filteröffnung (34) übergehen.

3. Filter nach einem der vorangehenden Ansprüche, **dadurch gekennzeichnet, dass** der Filter aufgrund des mindestens einen Schlitzes (37) quer zur Längsrichtung elastisch kompressibel ist, vorzugsweise derart, dass sich die Filteröffnung (34) unter manuell aufgebrachtem Druck elastisch verengen lässt.

4. Filter nach einem der vorangehenden Ansprüche, **dadurch gekennzeichnet, dass** die Hülse (31) konisch verjüngt ausgestaltet ist, insbesondere derart konisch ausgestaltet, dass die Hülse (31) gegenüber der Längsrichtung (50) eine Neigung in einem Winkelbereich von 0,5 Grad bis 9 Grad, bevorzugt von 0,5 Grad bis 5 Grad, weiter bevorzugt von 1 Grad bis 4 Grad, weiter bevorzugt von 1 Grad bis 3 Grad, aufweist.

5. Filter nach einem der vorangehenden Ansprüche, **dadurch gekennzeichnet, dass** sich der mindestens eine Schlitz (37) zur Filteröffnung (34) hin weitet, vorzugsweise in dem sich die Flanken (38, 38') des Schlitzes (37) im Wesentlichen V-förmig voneinander spreizen.

6. Filter nach einem der vorangehenden Ansprüche, **dadurch gekennzeichnet, dass** mindestens zwei Schlitze (37), vorzugsweise zwei diametral einander gegenüber angeordnete Schlitze, vorgesehen sind.

7. Filter nach einem der vorangehenden Ansprüche, **dadurch gekennzeichnet,**
- **dass** der Rand (42) der Filteröffnung (34) filteraussenseitig keine Hinterschneidung aufweist und/oder
- **dass** das Verhältnis von Länge des Filters (29) zu Aussendurchmesser des Filters an seinem weitesten Aussenumfang einen Wert von ≥ 2, vorzugsweise ≥ 3, hat.

8. Filter nach einem der vorangehenden Ansprüche, **dadurch gekennzeichnet, dass** als das Metall Stahl gewählt ist, insbesondere rostfreier Stahl,.

9. Filter nach einem der vorangehenden Ansprüche, **dadurch gekennzeichnet, dass** dieser aus einem zur Filterfunktion geeignet gelochten Metallblech hergestellt ist, wobei vorzugsweise die Löcher im Metallblech mindestens um 0,1 cm, bevorzugt mindestens um 0,3 cm, von den Rändern des mindestens einen Schlitzes (37) beabstandet sind, und/oder die Löcher im Metallblech mindestens um 0,2 cm, bevorzugt mindestens um 0,5 cm, weiter bevorzugt mindestens um 0,8 cm, weiter bevorzugt mindestens um 1,0 cm, vom Rand der Filteröffnung (34) beabstandet sind.

10. Filter nach einem der vorangehenden Ansprüche, **dadurch gekennzeichnet, dass** ein Übergang (41) von Schlitz (37) zu Filteröffnung (34) rundlich ausgeführt ist.

11. Trinkflaschenset beinhaltend
- eine Trinkflasche (11) mit Flaschenhals (13), welcher in eine Flaschenausgussöffnung (19) mündet, und
- einen Filter (29), welcher von der Flaschenausgussöffnung (19) her in den Flaschenhals (13) einsetzbar ist,
**dadurch gekennzeichnet,**
- **dass** der Flaschenhals (13) sich innenseitig von der Flaschenausgussöffnung (19) her konisch verengt, und
- **dass** der Filter (29) gemäss einem der vorangehenden Ansprüche 1-9 ausgebildet ist.

12. Trinkflaschenset nach Anspruch 11
**dadurch gekennzeichnet,**
- **dass** der mindestens eine Schlitz (37) von der Filteröffnung (34) bis mindestens zu einem Filterquerschnitt (45) verläuft, dessen Aussenumfang geringer ist als der Innenumfang der engsten Stelle (23) im Flaschenhals (13) und/oder
- **dass** die Länge des mindestens einen Schlitzes (37) mindestens der Länge des Flaschenhalses (13) entspricht oder länger ist, wobei mit der Länge des Flaschenhalses 13 hierbei insbesondere die Tiefe des Flaschenhalses gemeint ist, welche von der Flaschenausgussöffnung 19 bis zur halsinnenseitig engsten Flaschenhalsstelle (23) reicht und/oder
- **dass** die Länge des mindestens einen Schlitzes (37) mindestens der Länge des innenseitig sich konisch verengend ausgestalteten Anteils des Flaschenhalses (13) entspricht und/ oder
- **dass** die Länge des mindestens einen Schlitzes (37) mindestens wenigstens 0,5 cm länger, bevorzugt mindestens 1 cm länger, als die Länge des innenseitig konisch verengend ausgestalteten Anteils des Flaschenhalses (13) ausgestaltet ist.

13. Trinkflaschenset nach einem der vorangehenden Ansprüche, **dadurch gekennzeichnet, dass** der Filter (29) im Vergleich zum Flaschenhals (13) gleich oder stärker konisch verjüngt ausgeführt ist.

14. Trinkflaschenset nach einem der vorangehenden Ansprüche, **dadurch gekennzeichnet, dass** der Filter (29) in seiner Längserstreckung zumindest 1,5 mal so lange ist wie der Flaschenhals (13), bevorzugt dass der Filter (29) in seiner Längserstreckung zwischen 1,5 bis 4 mal so lange wie der Flaschenhals (13), weiter bevorzugt zwischen 1,5 bis 3 mal so lange wie der Flaschenhals (13), weiter bevorzugt zwischen 1,5 bis 2,5 mal so lange wie der Flaschenhals (13).

15. Trinkflaschenset nach einem der vorangehenden Ansprüche, **dadurch gekennzeichnet, dass** der grösste Aussendurchmesser des Filters in nicht komprimiertem Zustand des Filters grösser ist als der engste Innendurchmesser (23) im Flaschenhals (13), damit der Filter (29) beim Einführen in den Flaschenhals (13) gegen die sich konisch verengende Innenwand (14) klemmt.

## Claims

1. Filter (29) suitable for insertion into a bottle (11), in particular a drinking bottle, the filter being substantially configured in the form of a sleeve (31) with a first open end (33) and a second closed end (35), wherein the first end (33) forms a filter opening (34), the second end (35) a filter end (36) and the extension of the sleeve (31) defines substantially a longitudinal direction from its first end (33) towards its second end (35),
**characterized in**
- **that** the sleeve (31) is configured tapered, wherein the first end (33) has a first outer periphery and the second end (35) a second outer periphery which is less than the first outer periphery,
- **that** the filter has at least one slit (37) oriented substantially in longitudinal direction from the filter opening (34),
- **that** the filter is made from a metal sheet that has a thickness in the range of 0,05 mm to 1 mm or that the filter is made substantially of plastics, wherein the wall thickness of the filter is substantially in the range of 0,2 mm to 3 mm and
- **that** the filter has holes that have a filtering effect.

2. Filter according to claim 1, **characterized in that** the flanks (38, 38') of the slit (37) towards the open end (33) go over into the edge (42) of the filter opening (34).

3. Filter according to one of the preceding claims, **characterized in that**, due to the at least one slit (37), the filter is elastically compressible transversely to the longitudinal direction, preferably in such a manner that the filter opening (34) can be elastically constricted under manually applied pressure.

4. Filter according to one of the preceding claims, **characterized in that** the sleeve (31) is configured conically tapered, in particular conically in such a manner that the sleeve (31) has an inclination with respect to the longitudinal direction (50) in an angular range of 0,5 degree to 9 degrees, preferably of 0,5 degree to 5 degrees, more preferably of 1 degree to 4 degrees, more preferably of 1 degree to 3 degrees.

5. Filter according to one of the preceding claims, **characterized in that** the at least one slit (37) widens to the filter opening (34), preferably wherein the flanks (38, 38') of the slit (37) spread apart from each other substantially in a V-shape.

6. Filter according to one of the preceding claims, **characterized in that** at least two slits (37), preferably two diametrically opposed slits, are provided.

7. Filter according to one of the preceding claims, **characterized in**
- **that** the edge (42) of the filter opening (34) does not have any undercuts on the filter outside and/or
- **that** the ratio of the length of the filter (29) to the outer diameter of the filter at its widest extent has a value of ≥ 2, preferably of ≥ 3.

8. Filter according to one of the preceding claims, **characterized in that** steel is chosen as a metal, in particular stainless steel.

9. Filter according to one of the preceding claims, **characterized in that** it is made of a perforated metal sheet appropriate for the filtering function, wherein preferably the holes in the metal sheet are spaced from the edges of the at least one slit (37) by at least 0,1 cm, preferably at least by 0,3 cm and/or the holes in the metal sheet are spaced from the edge of the filter opening (34) at least by 0,2 cm, preferably at least by 0,5 cm, more preferably at least by 0,8 cm, more preferably at least by 1,0 cm.

10. Filter according to one of the preceding claims, **characterized in that** a transition (41) from the slit (37) to the filter opening (34) has a rounded design.

11. Drinking bottle set comprising
- a drinking bottle (11) with a bottle neck (13) that goes into a bottle pouring opening (19) and
- a filter (29) that can be inserted into the bottle neck (13) from the bottle pouring opening (19),
**characterized in**
- **that** the bottle neck (13) conically tapers on the inside from the bottle pouring opening (19) and
- **that** the filter (29) is configured according to one of the preceding claims 1 to 9.

12. Drinking bottle set according to claim 11, **characterized in**
- **that** the at least one slit (37) extends from the filter opening (34) to at least one filter cross-section (45), the outer periphery of which is less than the inner periphery of the narrowest point (23) in the bottle neck (13) and/or
- **that** the length of the at least one slit (36) corresponds at least to the length of the bottle neck (13) or is longer, wherein by length of the bottle neck (13) in particular the depth of the bottle neck is meant that extends from the bottle pouring opening (19) to the narrowest bottle neck point (23) on the neck inside and/or
- **that** the length of the at least one slit (37) corresponds at least to the length of the conically tapered configured part on the inside of the bottle neck (13) and/or
- **that** the length of the at least one slit is configured longer by at least 0,5 cm, preferably by at least 1 cm, than the length of the conically tapered configured part on the inside of the bottle neck (13).

13. Drinking bottle set according to one of the preceding claims, **characterized in that** the filter (29) is configured conically tapered same or stronger compared to the bottle neck (13).

14. Drinking bottle set according to one of the preceding claims, **characterized in that** the filter (29) in its longitudinal extension is at least 1,5 times as long as the bottle neck (13), preferably that the filter (29) in its longitudinal extension is between 1,5 to 4 times as long as the bottle neck (13), more preferably is between 1,5 to 3 times as long as the bottle neck (13), more preferably between 1,5 to 2,5 times as long as the bottle neck (13).

15. Drinking bottle set according to one of the preceding claims, **characterized in that** the largest outer diameter of the filter in not compressed condition of the filter is larger than the narrowest inner diameter (23) in the bottle neck (13) so that the filter (29), during insertion into the bottle neck (13), is jammed against the conically tapered inner wall (14).

## Revendications

1. Filtre (29) approprié pour être mis en place dans une bouteille (11), en particulier dans une gourde, le filtre étant substantiellement configuré en forme de manchon (31) avec une première extrémité ouverte (33) et une seconde extrémité fermée (35), la première extrémité (33) formant une ouverture de filtre (34), la seconde extrémité (35) formant une terminaison de filtre (36) et l'extension du manchon (31) définissant substantiellement une direction longitudinale de sa première extrémité (33) vers sa seconde extrémité (35),
**caractérisé en ce**
- **que** le manchon (31) est configuré en étant effilé, cependant que la première extrémité (33) présente une première périphérie extérieure et la seconde extrémité (35) une seconde périphérie extérieure qui est inférieure à la première périphérie extérieure,
- **que** le filtre présente au moins une fente (37) orientée substantiellement dans la direction longitudinale en partant de l'ouverture de filtre (34),
- **que** le filtre est fabriqué en une tôle métallique qui a une épaisseur de l'ordre de 0,05 mm à 1 mm ou que le filtre est fabriqué substantiellement en matière plastique, l'épaisseur de paroi du filtre étant substantiellement de l'ordre de 0,2 mm à 3 mm et
- **que** le filtre présente des trous qui ont un effet filtrant.

2. Filtre selon la revendication 1, **caractérisé en ce que** les flancs (38, 38') de la fente (37) se transforment en bord (42) de l'ouverture de filtre (34) en direction de l'extrémité ouverte (33).

3. Filtre selon l'une des revendications précédentes, **caractérisé en ce qu'**en raison de la au moins une fente (37) le filtre est compressible élastiquement transversalement à la direction longitudinale, de préférence de telle manière que l'ouverture de filtre (34) peut être rétrécie élastiquement par une pression appliquée manuellement.

4. Filtre selon l'une des revendications précédentes, **caractérisé en ce que** le manchon (31) est configuré en s'effilant en forme de cône, en particulier en forme de cône telle que le manchon (31) présente une inclinaison, par rapport à la direction longitudinale (50), dans une plage angulaire de 0,5 degré à 9 degrés, de préférence de 0,5 degré à 5 degrés, de manière davantage préférée de 1 degré à 4 degrés, de manière davantage préférée de 1 degré à 3 degrés.

5. Filtre selon l'une des revendications précédentes, **caractérisé en ce que** la au moins une fente (37) s'élargit vers l'ouverture de filtre (34), de préférence les flancs (38, 38') de la fente (37) s'écartant l'un de l'autre substantiellement en forme de V.

6. Filtre selon l'une des revendications précédentes, **caractérisé en ce qu'**au moins deux fentes (37) sont prévues, de préférence deux fentes placées diamétralement opposées l'une à l'autre.

7. Filtre selon l'une des revendications précédentes, **caractérisé en ce**
- **que** le bord (42) de l'ouverture de filtre (34) ne présente pas de contre-dépouille sur le côté extérieur du filtre et/ou
- **que** le rapport de la longueur du filtre (29) et du diamètre extérieur du filtre a, sur sa périphérie extérieure la plus large, une valeur de ≥2, de préférence de ≥3.

8. Filtre selon l'une des revendications précédentes, **caractérisé en ce que** de l'acier est choisi comme métal, en particulier de l'acier inoxydable.

9. Filtre selon l'une des revendications précédentes, **caractérisé en ce que** celui-ci est fabriqué en une tôle métallique perforée appropriée pour la fonction de filtrage, cependant que de préférence les trous sont espacés dans la tôle métallique des bords de la au moins une fente (37) d'au moins 0,1 cm, de préférence d'au moins 0,3 cm et/ou les trous dans la tôle métallique sont espacés du bord de l'ouverture de filtre (34) d'au moins 0,2 cm, de préférence d'au moins 0,5 cm, de manière davantage préférée d'au moins 0,8 cm, de manière davantage préférée d'au moins 1,0 cm.

10. Filtre selon l'une des revendications précédentes, **caractérisé en ce qu'**une transition (41) de la fente (37) à l'ouverture de filtre (34) est réalisée de forme arrondie.

11. Ensemble de gourde contenant :
- une gourde (11) avec un col de gourde (13) qui débouche dans une ouverture verseuse de gourde (19) et
- un filtre (29) qui peut être inséré dans le col de gourde (13) par l'ouverture verseuse de gourde (19),
**caractérisé en ce**
- **que** le col de gourde (13) se rétrécit en forme de cône sur le côté intérieur à partir de l'ouverture verseuse de gourde (19) et
- **que** le filtre (29) est configuré selon l'une des revendications précédentes 1 à 9.

12. Ensemble de gourde selon la revendication 11, **caractérisé en ce**
- **que** la au moins une fente (37) s'étend de l'ouverture de filtre (34) jusqu'au moins une section transversale de filtre (45) dont la périphérie extérieure est inférieure à la périphérie intérieure de l'endroit le plus étroit (23) dans le col de gourde (13) et/ou
- **que** la longueur de la au moins une fente (37) correspond au moins à la longueur du col de gourde (13) ou est plus longue, cependant que par la longueur du col de gourde (13) on entend en particulier la profondeur du col de gourde qui va de l'ouverture verseuse de gourde (19) à l'endroit le plus étroit du col de gourde (23) sur le côté intérieur du col et/ou
- **que** la longueur de la au moins une fente (37) correspond au moins à la longueur de la partie du col de gourde (13) configurée en se rétrécissant en forme de cône sur le côté intérieur et/ou
- **que** la longueur de la au moins une fente (37) est configurée au moins plus longue d'au moins 0,5 cm, de préférence plus longue d'au moins 1 cm que la longueur de la partie du col de gourde (13) configurée en se rétrécissant en forme de cône sur le côté intérieur.

13. Ensemble de gourde selon l'une des revendications précédentes, **caractérisé en ce que** le filtre (29) est configuré, par comparaison au col de gourde (13) en se rétrécissant en forme de cône égale ou plus forte.

14. Ensemble de gourde selon l'une des revendications précédentes, **caractérisé en ce que** le filtre (29) est, dans son extension longitudinale, au moins 1,5 fois aussi grand que le col de gourde (13), de préférence que le filtre est, dans son extension longitudinale, entre 1,5 et 4 fois aussi long que le col de gourde (13), de manière davantage préférée est entre 1,5 et 3 fois aussi long que le col de gourde (13), de manière davantage préférée est entre 1,5 et 2,5 fois aussi long que le col de gourde (13).

15. Ensemble de gourde selon l'une des revendications précédentes, **caractérisé en ce que** le plus grand diamètre extérieur du filtre, à l'état non comprimé du filtre, est supérieur au diamètre intérieur le plus étroit (23) dans le col de gourde (13) pour que le filtre (29) se coince, lors de l'introduction dans le col de gourde (13), contre la paroi intérieure (14) qui se rétrécit en forme de cône.
